# EUROPEAN PATENT SPECIFICATION

(11) **EP 2 077 086 B1**
(45) Date of publication and mention of the grant of the patent: **22.12.2010**
(21) Application number: 08382001.9
(22) Date of filing: 02.01.2008
(51) Int. Cl.: A47J 31/36, A47J 31/46

(54) **Coffee maker with depressurization valve**
Kaffeemaschine mit Druckablassventil
Machine à café dotée d'une soupape de dépressurisation

(43) Date of publication of application: 08.07.2009
(73) Proprietor: Celaya, Emparanza Y Galdos Internacional, S.A., 01013 Vitoria Alava (ES)
(72) Inventor: Moreno Jordana, Luís, 50008, Zaragoza (ES)
(74) Representative: ZBM Patents

(56) References cited:
- EP-A- 0 465 877
- EP-A- 0 561 741
- WO-A-02/100227
- FR-A- 2 132 060

## Description

The present invention relates to a coffee maker comprising a boiler assembly, a brewing chamber, a depressurizing waste water reservoir and a mechanical three-way valve assembly. Said valve assembly has a casing comprising a first chamber provided with an inlet from the boiler assembly, a second chamber having a first outlet to the brewing chamber and a second outlet to the depressurizing waste water reservoir, and a passageway between both chambers. The mechanical three-way valve assembly further comprises a piston that can slide inside the casing and extends into the first and the second chambers through the passageway between them. The coffee maker is preferably intended to make espresso coffee.

### BACKGROUND ART

Espresso coffee makers (the machines that make espresso coffee) are provided with a boiler and a heating element for heating the water in the boiler or with a thermo-block system. Once the water has reached the appropriate temperature, upon a user's command a pump impels the hot water out of the boiler or thermo-block system and towards a brewing chamber, where it blends with coffee powder to make a coffee.

Conventional coffee makers have a device for shutting off the water in the boiler assembly. When the water is being heated its pressure increases and said device may not be sealing enough to prevent water leaking. When the user commands a coffee, the pump pressurizes even more the hot water and the shutting device opens a water outlet from the water reservoir to the brewing chamber. When the coffee-making is stopped, the pump stops too and the shutting device closes said outlet, but normally some pressurized water remains in the brewing chamber and this water keeps dripping from the brewing chamber even after the coffee has been made.

Moreover, if the user opens the brewing chamber after completion of the coffee, the remaining pressurized water spills and wets the surroundings. Even when some time has elapsed and the remaining water has depressurized to the atmospheric level, the coffee remains wet and perhaps with a small puddle on it.

Patent FR2132060 discloses a coffee maker comprising a boiler for heating the water, a brewing assembly, and a valve mechanism. Said valve is provided with an inlet from the boiler, one outlet to the brewing assembly, and a chamber opened to an evacuation conduit for the pressurized water remaining in the brewing assembly when the blending stops. The outlet to the brewing assembly opens from an inner duct of the valve, against the ends of which two respective gaskets can be seated. The movement of a lever controls which of the gaskets is pressed against its seat. Said lever is actuated, in a complicated way, by another lever which is engaged to a meter for measuring the required water dose.

Some high end coffee makers include a three-way solenoid valve. When the brewing is ended, said solenoid-valve connects the brewing chamber to a reservoir, which then receives the remaining pressurized water, so that the waste coffee in the brewing chamber dries. These electro-valves are expensive and need be electronically controlled, which is expensive too. Thus, it is not feasible to use them in any type of espresso coffee maker.

### SUMMARY OF THE INVENTION

It is an object of the present invention to provide a coffee maker device that simply and economically prevents the brewing chamber from dripping water.

According to one aspect of the invention, the piston is engaged to a cam and comprises a gasket in the second chamber that can seal said passageway, thus closing the passage of hot water to the brewing chamber. The cam actuates the piston and allows for a compact design of the valve assembly.

Advantageously, there is a knob linked to the cam and elastic means that push the piston against the cam, so that upon rotation of the knob the cam can make the piston to move longitudinally in the casing, in order to swap the three-way valve assembly between a resting position (closing the passage of hot water to the brewing chamber) and an operating position (opening the passage of hot water to the brewing chamber).

In an embodiment, the knob comprises a cammed protrusion, so that upon rotation of the knob said protrusion can engage a switch that switches on and off the pumping of hot water from the boiler assembly to the first chamber of the three-way valve assembly.

As mentioned, the knob has a resting position, in which the cam places the piston so that the gasket seals the passageway between the first and second chambers, isolating them from each other, and an operating position, in which the cam places the piston so that the gasket does not seal the passageway, whereby the inlet and the first outlet are in fluidic contact. With the knob in its resting position, the brewing chamber and the depressurizing waste water reservoir are in fluidic contact through the second outlet, but with the knob in its operating position the gasket seals said second outlet.

When the knob is in its resting position, it switches off the pumping of hot water into the first chamber, and when the knob is in its operating position, it switches on the pumping of hot water into the first chamber.

Preferably, the three-way valve assembly is arranged in contact, or integral, with the boiler assembly, so that some heat transmitted by the boiler assembly can easily reach the three-way valve assembly, thus heating the passage of water through the valve and minimizing the loss of heat of the hot water when driven to the brewing chamber.

In an embodiment, the piston has at least one longitudinal groove that connects the first and second chambers through the passageway between them. The casing has at least an inner flat wall and the piston has at least one corresponding flat wall, so that the contact between the two flat walls prevents the piston from rotating inside the casing. Preferably, the piston's groove is defined on the piston's flat wall, although it may be defined on any of the piston's walls, even on more than one wall.

In another embodiment the boiler assembly is connected to a steamer assembly so that a user can get hot water or can get steam to froth milk or any other liquid

### BRIEF DESCRIPTION OF THE DRAWINGS

A particular embodiment of the present invention will be described in the following, only by way of non-limiting example, with reference to the appended drawings, in which:
figure 1 is a perspective view of the valve assembly, boiler assembly, filter holder and steamer assembly of a coffee maker;
figure 2 is a longitudinal cross-section view of the valve assembly, the boiler assembly and the filter holder of a coffee maker, taken along the X-X plane of fig. 1;
figure 3 is an enlarged cross-section view of the valve assembly in a resting position taken along the X-X plane;
figure 4 is an enlarged cross-section perspective of the valve assembly in an operating position according to the X-X plane; elements 5, 6 and a portion of the element 9 are not sectioned in order to clarify the description; the dashed arrows show the path of hot water;
figure 5 is an enlarged cross-section perspective of the valve assembly in a depressurizing position; elements 6.2, 6.3 and a portion of the element 9 are not sectioned in order to clarify the description; the dashed arrows show the path of waste water; and
figure 6 is an enlarged cross-section of the steamer assembly taken along the plane Y-Y of figure 1.

The following references are used in these drawings:
A. Valve assembly
B. Boiler assembly
C. Filter holder
D. Steamer assembly
   1. Valve casing
   1.1. Passage
   1.2. First chamber
   1.3. Second chamber
   2. Front valve stopper
   3. Rear valve stopper
   4. Knob
   4.1. Cammed protrusion
   4.2. Protrusion
   5. Cam
   6. Piston
   6.1. First portion
   6.2. Second portion
   6.3. Third portion
   6.4. Longitudinal groove
   6.5. Flat wall
   7. O-ring
   8. Spring
   9. Gasket
   10. Valve inlet
   11. First outlet
   12. Second outlet
   13. Boiler body
   13.1. Chamber
   13.2. Water duct
   14. Water inlet
   15. Brewing chamber
   16. Switch
   17. Steamer inlet
   18. Steamer body
   19. Steamer shaft
   20. Steamer knob

### DESCRIPTION OF PARTICULAR EMBODIMENTS

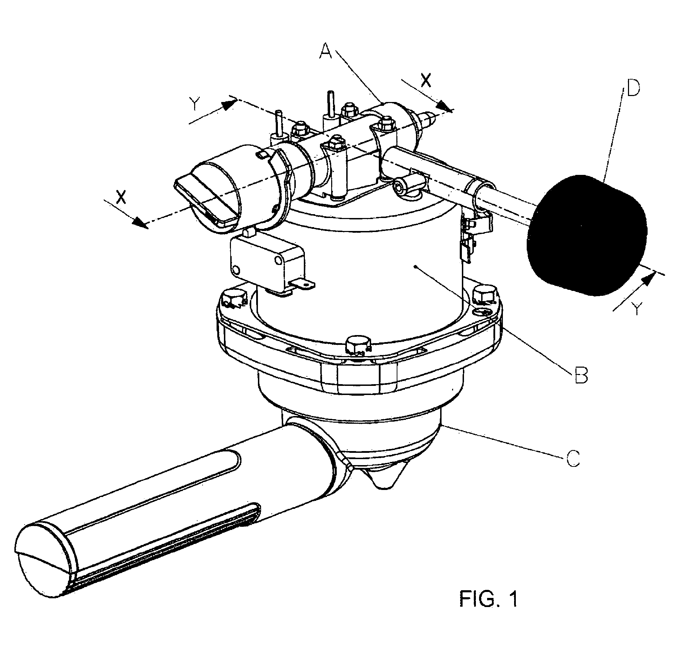

An espresso coffee maker (not shown) according to the present invention comprises a mechanical three-way valve assembly (A), a boiler assembly (B), a filter holder (C) and a steamer assembly (D) (see figure 1). The preferred materials for these assemblies are: polyetherimide or polyphenylene sulfide for the three-way valve casing (1), stainless steel for the boiler body (13), aluminium for the filter holder (C) and stainless steel for the steamer body (18).

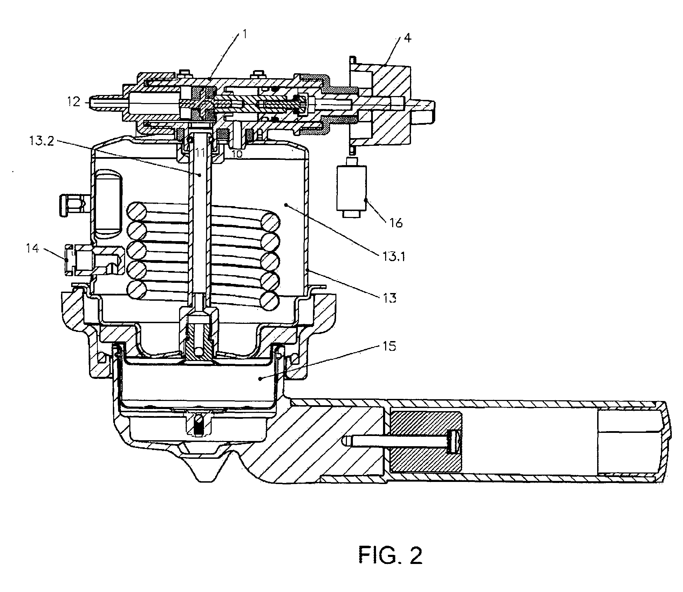

Figure 2 shows a longitudinal cross-section of the valve assembly (A), boiler assembly (B) and filter holder (C) including a switch (16) that switches on and off a pump (not shown).

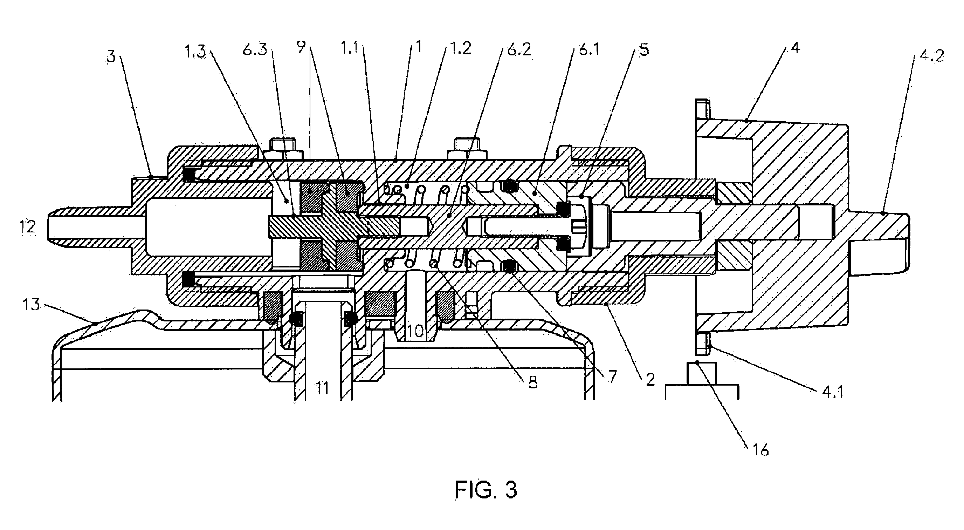

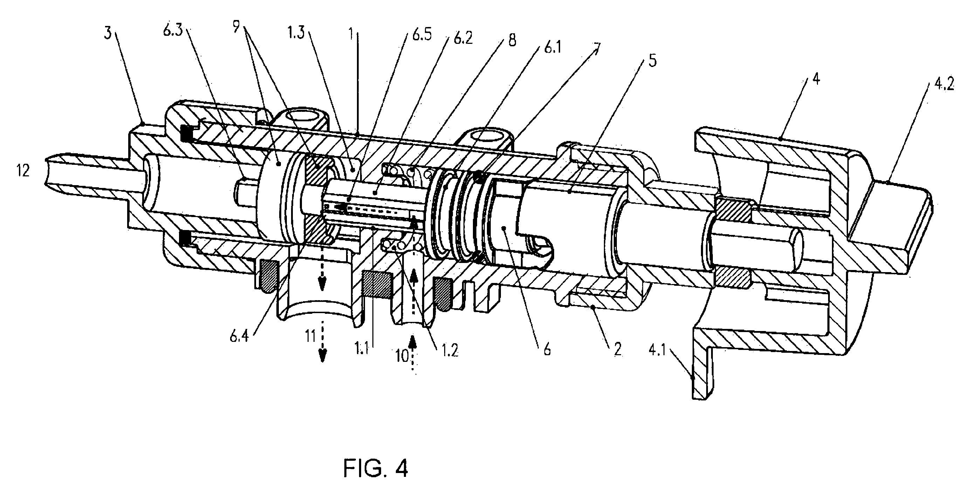

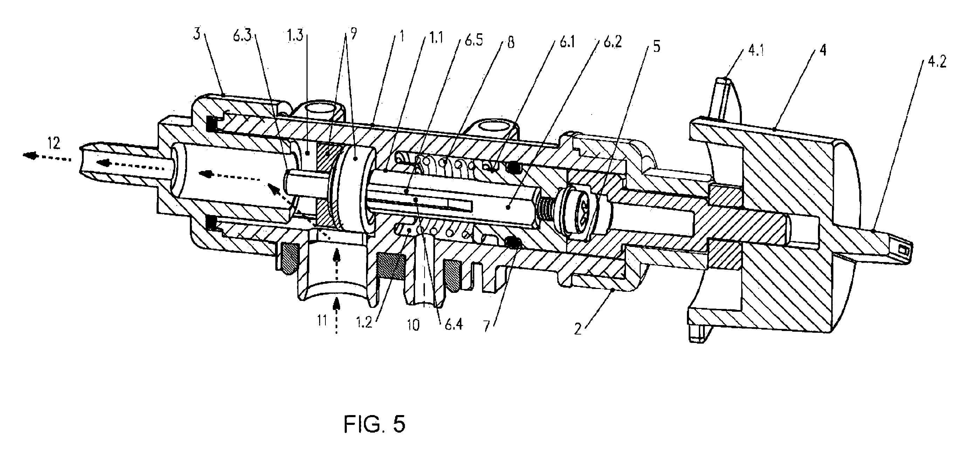

Figure 3 shows the valve assembly (A) in the resting state of the coffee maker before the making of a coffee, figure 4 shows the valve assembly (A) in the operating state of the coffee maker, when a coffee is being made and figure 5 shows the valve assembly (A) after a coffee has been made.

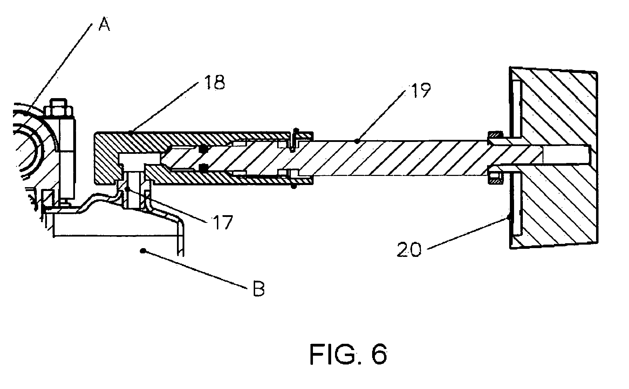

Figure 6 shows a cross-section of the steamer assembly in a resting position.

The valve assembly (A) comprises a casing (1) having an inlet (10) from the boiler assembly (B), a first outlet (11) to the brewing chamber (15) and a second outlet (12) to a depressurizing waste water reservoir (not shown). The casing (1) also comprises a first chamber (1.2), a second chamber (1.3), and a narrowing between chambers (1.2) and (1.3) which defines a passageway (1.1) between both chambers (1.2 and 1.3). The inlet (10) opens into the first chamber (1.2), while the first and second outlets (11 and 12) are located in the second chamber (1.3). The first outlet (11) leads to a duct (13.2) that extends across the boiler chamber (13.1) and into the brewing chamber (15).

A piston (6) has a first portion and a second portion (6.1 and 6.2) in the first chamber (1.2) and a third portion (6.3) in the second chamber (1.3) and can slide through the passageway (1.1). The third portion (6.3) of the piston (6) is provided with a gasket (9) (or the gasket (9) is mounted onto the third portion 6.3) that can seal the passageway (1.1) in the second chamber (see figures 3 and 5). Piston (6) comprises at least a longitudinal groove (6.4) and at least a flat wall (6.5) besides the groove (6.4) (actually the flat wall (6.5) is divided in two portions, one to each side of the groove (6.4); see figures 4 and 5). That is, the groove (6.4) is defined on the flat wall (6.5). At least one corresponding flat wall (not shown) is defined inside the casing (1) to cooperate with the other flat wall (6.5) in order to prevent the piston (6) from rotating inside the casing (1). The groove (6.4) fluidly connects the first chamber (1.2) and the second chamber (1.3).

Towards the end of the first chamber (1.2) opposing the passageway (1.1), the piston (6) comprises a wider portion (6.1) on which one or two O-rings (7) are mounted in order to seal the first chamber (1.2) from the rest of the inside of the casing (1). A spring (8) arranged between the narrowing of the passageway (1.1) and the piston portion (6.1) biases the piston (6) far from said passageway (1.1), so that the gasket (9) is normally urged against the passageway (1.1), thus sealing the second chamber (1.3) from the first chamber (1.2). The O-rings (7) and the gasket (9), preferably made of silicone, are covered with food grade grease in order to reduce friction between these elements and the casing (1)

A cam (5) can engage the piston portion (6.1) in order to exert a force opposing the spring force, thus driving said portion (6.1) towards the passageway (1.1) and detaching the gasket (9) from said passageway (1.1). A knob (4), external to the casing (1), is linked to the cam (5), so that upon rotation of the knob (4) the piston (6) can be moved longitudinally in one direction or in the opposite one.

The second outlet (12) is located in one end of the rear valve stopper (3). The gasket (9) can engage the other end of the rear valve stopper when the cam (5) has pushed the piston third portion (6.3) against said end, thus sealing the second outlet (12) (see figure 4).

The knob (4) comprises a cammed protrusion (4.1) that can engage a micro-switch (16) that switches on and off the pumping of hot water from the boiler chamber (13.1) to the brewing chamber (15), and through the three-way valve assembly (A). Thus, upon rotation of the knob (4) or the protrusion (4.2) said cammed protrusion (4.1) can switch on and off the pump (not shown) for hot water. Therefore the knob (4) is a control for the user to command the making of coffee. A LED diode (not shown) indicates the user when to turn the knob (4). Thanks to a thermostat or a temperature sensor (not shown) on the boiler body (13), when the water (that has reached the boiler chamber (13.1) through the inlet (14)) in the boiler chamber (13.1) has reached a predetermined temperature, the LED diode lights up.

When the knob (4) is in a resting position (figures 3 and 5), the protrusion (4.1) does not engage the micro-switch (16), the cam (5) does not act on the piston (6) and the gasket (9) seals the second chamber (1.3) from the first chamber (1.2) but leaves the second outlet (12) open; the first outlet (11) is open too. Therefore, the brewing chamber (15) cannot receive pressurized hot water from the boiler chamber (13.1) but can instead expel its possible remaining waste water though the first outlet (11) and the second outlet (12) to the depressurizing waste water reservoir (not shown).

When the knob (4) is in operating position (figure 4), the protrusion (4.1) engages the micro-switch (16), switching on the pump, and the cam (5), through the piston (6), pushes the gasket (9) against the rear valve stopper (3), shutting the second outlet (12) but leaving in fluidic connection the inlet (10), and the first outlet (11) through the longitudinal groove (6.4). Therefore the pumped hot water reaches the brewing chamber (15). But when the knob (4) is brought again to its resting position, the situation is like in the previous paragraph and the coffee making is stopped and the pressurized water remaining in the brewing chamber (15) is expelled to the depressurizing waste water reservoir.

Therefore the three-way valve assembly (A) has two positions and works according to three phases: i) when no coffee is being or has been made and the water is just being heated in the boiler chamber (13.1); ii) when a coffee is being made, whereby the pump is working, the inlet (10) and the first outlet (11) are connected through the longitudinal groove (6.4) and the second outlet (12) is closed, so that pressurized hot water reaches the brewing chamber (15); iii) when the coffee has been made, the pump stops working, the passageway (1.1) is closed and the second outlet (12) is open, so that the pressurized hot water remaining in the brewing chamber (15) is drawn to the depressurizing waste water reservoir.

The three-way valve assembly (A) is arranged in contact, or integral, with the boiler assembly (B), so that some heat transmitted by the boiler assembly (B) can easily reach the three-way valve assembly (A), thus heating the passage of water through the valve assembly (A) and minimizing the loss of heat of the hot water when driven to the brewing chamber (15).

As shown in figure 6, the boiler assembly (B) has another outlet (17) which is the steamer assembly inlet. The steamer assembly (D) comprises an inlet (17), a body (18), a shaft (19), a knob (20) and an outlet (see figure 1). The user can use the steamer for example to get hot water or to get steam to froth milk or any other liquid.

Thus a coffee maker according to the present invention never leaks through the brewing chamber, heat loss is reduced, the brewing chamber can be cleanly opened, the waste coffee can be cleanly removed, and since the three-way valve is purely mechanical, the coffee maker of the invention can be manufactured cheaply.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

For example, the knob (4) and the cam (5) can be formed as an integral element.

## Claims

1. Coffee maker comprising a boiler assembly (B), a brewing chamber (15), a depressurizing waste water reservoir and a mechanical three-way valve assembly (A), the latter having a casing (1) comprising a first chamber having an inlet (10) from the boiler assembly (B), a second chamber (1.3) having a first outlet (11) to the brewing chamber (15) and a second outlet (12) to the depressurizing waste water reservoir, and a passageway (1.1) between both chambers (1.2 and 1.3), the mechanical three-way valve assembly (A) further comprising a piston (6) that can slide inside the casing (1) and extends into the first and the second chambers (1.2 and 1.3) through the passageway (1.1) between them, **characterized in that** the piston (6) is engaged to a cam (5) and comprises a gasket (9) in the second chamber (1.3) that can seal said passageway (1.1).

2. Coffee maker according to claim 1, wherein the three-way valve assembly (A) comprises a knob (4) linked to the cam (5) and elastic means (8) that push the piston (6) against the cam (5), so that upon rotation of the knob (4) the cam (5) can make the piston (6) to move longitudinally in the casing (1).

3. Coffee maker according to claim 2, wherein the knob (4) comprises a cammed protrusion (4.1), so that upon rotation of the knob (4) said protrusion (4.1) can engage a switch (16) that switches on and off the pumping of hot water from the boiler assembly (B) to the first chamber (1.2) of the three-way valve assembly (A).

4. Coffee maker according to claim 2 or 3, wherein the knob (4) has a resting position, in which the cam (5) places the piston (6) so that the gasket (9) seals the passageway (1.1) between the first and second chambers (1.2 and 1.3), isolating them from each other, and an operating position, in which the cam (5) places the piston (6) so that the gasket (9) does not seal the passageway (1.1), whereby the inlet (10) and the first outlet (11) are in fluidic contact.

5. Coffee maker according to claim 4, wherein, with the knob (4) in its resting position, the brewing chamber (15) and the depressurizing waste water reservoir are in fluidic contact through the second outlet (12), but with the knob (4) in its operating position the gasket (9) seals said second outlet (12).

6. Coffee maker according to claim 4 or 5, wherein the knob (4), in its resting position, switches off the pumping of hot water into the first chamber (1.2), and in its operating position switches on the pumping of hot water into the first chamber (1.2).

7. Coffee maker according to any of the preceding claims, wherein the piston (6) has at least one longitudinal groove (6.4) that connects the first and second chambers (1.2 and 1.3) through the passageway (1.1) between them.

8. Coffee maker according to any of the preceding claims, wherein the casing (1) has at least an inner flat wall and the piston (6) has at least one corresponding flat wall (6.5), so that the contact between the flat walls prevents the piston (6) from rotating inside the casing (1).

9. Coffee maker according to claim 7 or 8, wherein the piston's groove (6.4) is defined on at least one of the piston's walls.

10. Coffee maker according to claim 8, wherein the piston's groove (6.4) is defined on the piston's flat wall (6.5).

11. Coffee maker according to any of the preceding claims, wherein the three-way valve assembly (A) is arranged in contact, or integral, with the boiler assembly (B), so that some heat transmitted by the boiler assembly (B) can easily reach the three-way valve assembly (A).

## Patentansprüche

1. Kaffeemaschine mit einer Wassererhitzereinheit (B), einer Brühkammer (15), einem druckreduzierenden Abwasserbehälter und einer mechanischen Dreiwegeventileinheit (A), wobei die letztere ein Gehäuse (1) mit einer ersten Kammer, die einen Einlass (10) von der Wassererhitzereinheit (B) her besitzt, einer zweiten Kammer (1.3), die einen ersten Auslass (11) zur Brühkammer (15) hin und einen zweiten Auslass (12) zum druckreduzierenden Abwasserbehälter hin besitzt, und mit einem Durchlass (1.1) zwischen beiden Kammern (1.2 und 1.3), wobei die mechanische Dreiwegeventileinheit (A) weiterhin einen Kolben (6) besitzt, der im Inneren des Gehäuses (1) gleiten kann und bis in die erste und die zweite Kammer (1.2 und 1.3) durch den Durchlass (1.1) zwischen diesen ausgefahren wird, **dadurch gekennzeichnet, dass** der Kolben (6) in einen Nocken (5) eingelegt ist und eine Dichtung (9) in der zweiten Kammer (1.3) besitzt, die den besagten Durchlass (1.1) abdichten kann.

2. Kaffeemaschine nach Anspruch (1), bei der die Dreiwegeventileinheit (A) einen mit dem Nocken (5) verbundenen Drehknopf (4) und elastische Teile (8) besitzt, die den Kolben (6) gegen den Nocken (5) drücken, so dass der Nocken (5) bei Drehen des Drehknopfes (4) bewirken kann, dass sich der Kolben (6) im Gehäuse (1) in Längsrichtung bewegt.

3. Kaffeemaschine nach Anspruch 2, bei der der Drehknopf (4) einen nockenartigen Vorsprung (4.1) besitzt, so dass der besagte Vorsprung (4.1) bei Drehen des Drehknopfes (4) einen Schalter (16) betätigen kann, der das Pumpen von heißem Wasser von der Wassererhitzereinheit (B) zur ersten Kammer (1.2) der Dreiwegeventileinheit (A) ein- und ausschaltet.

4. Kaffeemaschine nach Anspruch 2 oder 3, bei der der Drehknopf (4) eine Ruhestellung besitzt, in welcher der Nocken (5) den Kolben (6) so positioniert, dass die Dichtung (9) den Durchlass (1.1) zwischen der ersten und der zweiten Kammer (1.2 und 1.3) abdichtet und sie so voneinander isoliert, und eine Arbeitsstellung besitzt, in welcher der Nocken (5) den Kolben (6) so positioniert, dass die Dichtung (9) den Durchlass (1.1) nicht abdichtet, wodurch der Einlass (10) und der erste Auslass (11) in Flüssigkeitskontakt miteinander stehen.

5. Kaffeemaschine nach Anspruch 4, bei der die Brühkammer (15) und der druckreduzierende Abwasserbehälter, wenn der Drehknopf (4) sich in der Ruhestellung befindet, über den zweiten Auslass (12) in Flüssigkeitskontakt miteinander stehen, wenn aber der Drehknopf (4) sich in der Arbeitsstellung befindet, die Dichtung (9) den besagten Auslass (12) abdichtet.

6. Kaffeemaschine nach Anspruch 4 oder 5, bei der der Drehknopf (4) in der Ruhestellung das Pumpen von heißem Wasser in die erste Kammer (1.2) abschaltet, und in der Arbeitsstellung das Pumpen von heißem Wasser in die erste Kammer (1.2) einschaltet.

7. Kaffeemaschine nach einem der vorstehenden Ansprüche, bei der der Kolben (6) mindestens eine Längsnut (6.4) besitzt, die die erste und die zweite Kammer (1.2 und 1.3) über den Durchlass (1.1) zwischen ihnen verbindet.

8. Kaffeemaschine nach einem der vorstehenden Ansprüche, bei der das Gehäuse (1) mindestens eine flache Innenwand besitzt und der Kolben (6) mindestens eine entsprechende flache Wand (6.5) besitzt, so dass der Kontakt der beiden flachen Wände den Kolben (6) davor bewahrt, im Gehäuse (1) zu rotieren.

9. Kaffeemaschine nach Anspruch 7 oder 8, bei der die Nut (6.4) des Kolbens an mindestens einer der flachen Kolbenwände vorzufinden ist.

10. Kaffeemaschine nach Anspruch 8, bei der die Nut (6.4) des Kolbens auf der flachen Wand (6.5) des Kolbens vorzufinden ist.

11. Kaffeemaschine nach einem der vorstehenden Ansprüche, bei der die Dreiwegeventileinheit (A) in Kontakt mit der Wassererhitzereinheit (B) steht oder in dieselbe integriert ist, so dass eine gewisse Menge der von der Wassererhitzereinheit (B) übertragenen Wärme leicht die Dreiwegeventileinheit (A) erreichen kann.

## Revendications

1. Machine à café comprenant un ensemble de chaudière (B), une chambre à infusion (15), un réservoir à eaux usées à dépressurisation et un assemblage de soupape mécanique à trois voie (A), ce dernier comportant un boîtier (1) comprenant une première chambre comportant une entrée (10) provenant de l'ensemble de chaudière (B), une deuxième chambre (1.3) comportant une première sortie (11) vers la chambre à infusion (15) et une deuxième sortie (12) vers le réservoir à eaux usées à dépressurisation, et un passage (1.1) entre l'une et l'autre chambres (1.2 et 1.3), l'assemblage de soupape mécanique à trois voie (A) comprenant en outre un piston (6) qui peut coulisser à l'intérieur du boîtier (1) et s'étend dans les première et deuxième chambres (1.2 et 1.3) à travers le passage (1.1) entre elles, **caractérisée en ce que** le piston (6) est amené en prise sur une came (5) et comprend un joint d'étanchéité (9) dans la deuxième chambre (1.3) lequel peut sceller ledit passage (1.1).

2. Machine à café selon la revendication 1, dans lequel l'assemblage de soupape à trois voies (A) comprend une molette (4) liée à la came (5) et des moyens élastiques (8) qui poussent le piston (6) contre la came (5), de sorte que lors d'une rotation de la molette (4) la came (5) peut obliger le piston (6) à se déplacer longitudinalement dans le boîtier (1).

3. Machine à café selon la revendication 2, dans laquelle la molette (4) comprend une partie saillante à came (4.1), de sorte que lors d'une rotation de la molette (4) ladite partie saillante (4.1) peut amener prise un commutateur (16) qui active et désactive le pompage d'eau chaude de l'ensemble de chaudière (B) vers la première chambre (1.2) de l'assemblage de soupape à trois voies (A).

4. Machine à café selon la revendication 2 ou 3, dans laquelle la molette (4) a une position au repos, dans laquelle la came (5) place le piston (6) de sorte que le joint d'étanchéité (9) scelle le passage (1.1) entre les première et deuxième chambres (1.2 et 1.3), les isolant l'une de l'autre, et une position de fonctionnement, dans laquelle la came (5) place le piston (6) de sorte que le joint d'étanchéité (9) ne scelle pas le passage (1.1), moyennant quoi l'entrée (10) et la première sortie (11) sont en contact de fluide.

5. Machine à café selon la revendication 4, dans laquelle, avec la molette (4) dans sa position au repos, la chambre à infusion (15) et le réservoir à eaux usées à dépressurisation sont en contact de fluide à travers la deuxième sortie (12), mais avec la molette (4) dans sa position de fonctionnement le joint d'étanchéité (9) scelle ladite deuxième sortie (12).

6. Machine à café selon la revendication 4 ou 5, dans laquelle la molette (4), dans sa position au repos, désactive le pompage d'eau chaude dans la première chambre (1.2), et dans sa position de fonctionnement active le pompage d'eau chaude dans la première chambre (1.2).

7. Machine à café selon l'une quelconque des revendications précédentes, dans laquelle le piston (6) a au moins une rainure longitudinale (6.4) qui relie les première et deuxième chambres (1.2 et 1.3) à travers le passage (1.1) entre elles.

8. Machine à café selon l'une quelconque des revendications précédentes, dans laquelle le boîtier (1) a au moins une paroi plate interne et le piston (6) a au moins une paroi plate (6.5) correspondante, de sorte que le contact entre les parois plates empêche le piston (6) de tourner à l'intérieur du boîtier (1).

9. Machine à café selon la revendication 7 ou 8, dans laquelle la rainure (6.4) du piston est définie sur au moins une des parois de piston.

10. Machine à café selon la revendication 8, dans laquelle la rainure (6.4) du piston est définie sur la paroi plate (6.5) du piston.

11. Machine à café selon l'une quelconque des revendications précédentes, dans laquelle l'assemblage de soupape à trois voies (A) est agencé en contact, ou solidaire, avec l'ensemble de chaudière (B), de sorte qu'une certaine chaleur transmise par l'ensemble de chaudière (B) peut facilement atteindre l'assemblage de soupape à trois voies (A).
